# EUROPEAN PATENT APPLICATION

(11) **EP 2 211 410 A1**
(43) Date of publication of application: **28.07.2010**
(21) Application number: 08834249.8
(22) Date of filing: 26.09.2008
(51) Int. Cl.: H01M 8/04, B65D 83/76

(54) **FUEL CARTRIDGE FOR FUEL CELL**

(30) Priority: 26.09.2007 JP 2007249279
(71) Applicant: Toyo Seikan Kaisha, Ltd., Tokyo 100-8522 (JP); Kabushiki Kaisha Toshiba, Minato-ku Tokyo 105-8001 (JP)
(72) Inventor: YOSHIHIRO, Kenji, Yokohama-shi Kanagawa 230-0001 (JP); HONDA, Tetsuya, Yokohama-shi Kanagawa 230-0001 (JP); KANADA, Teijirou, Yokohama-shi Kanagawa 230-0001 (JP); YAMAMORI, You, Yokohama-shi Kanagawa 230-0001 (JP); TANAKA, Masayoshi, Yokohama-shi Kanagawa 230-0001 (JP); HONDA, Jou, Yokohama-shi Kanagawa 230-0001 (JP); TANAKA, Kenjirou, Yokohama-shi Kanagawa 230-0001 (JP); NARUTAKI, Kouichi, Yokohama-shi Kanagawa 230-0001 (JP); TAKAHASHI, Kenichi, Yokohama-shi Kanagawa 235-8522 (JP)
(74) Representative: Skone James, Robert Edmund
(86) International application number: PCT/JP2008/067550
(87) International publication number: WO 2009/041652

(57) **Abstract**

Liquid fuel received in a container can be injected manually in a safe, easy and convenient manner. In a fuel cell cartridge for fuel cells in which at a port portion (14) of the container (10) in which the liquid fuel is received, there is provided a plug (30P) that is adapted to be connected with a fuel cell for filling the fuel thereinto, a bellows portion (15) acting as a portion capable of extension and contraction is formed in at least a part of the container (10), and on the plug (30P), there is provided a valve mechanism (34) which is held in a normally closed state in a free state thereof, and is opened when the plug is connected with the fuel cell (70).

## Description

### [TECHNICAL FIELD]

The present invention relates to a fuel cartridge for replenishing fuel cells with liquid fuel.

### [BACKGROUND TECHNIQUE]

For example, as such a kind of conventional fuel cartridge for fuel cells, there has been known one as described in a first patent document. This fuel cartridge is constructed so as to be provided with a first contractible container in which liquid fuel is received and a second rigid container having the first container received therein. The second container has a tapered filling hole, which is adapted to be attached to an attachment opening in the fuel cells leading to a fuel tank, so that the first container is placed into fluid communication with the fuel tank thereby to replenish the fuel from the first container to the fuel tank. As the fuel flows out from the first container, the pressure in the first container becomes negative, but the first container with contractibility being given thereto contracts by an amount corresponding to the amount of fuel having flowed out therefrom, whereby the negative pressure generated in the interior of the container can be eliminated.

However, with the above-mentioned conventional fuel cartridge, the first container is received in the second container of high rigidity, so the protection of the first container and the liquid fuel stored in the first container can be made, the structure of the cartridge can be simplified and the supply of the liquid fuel can be performed in a stable manner, but there are the following problems. That is, an operation of directly pressing the first container by hand is not possible, and when there occurs a variation in the contraction of the first container, it becomes not easy to dispense the liquid fuel. As a result, there has still been room for improvements to the mass production of the cartridge including these containers in a stable manner.
[First Patent Document] Japanese patent application laid-open No. 2005-71713

### [DISCLOSURE OF THE INVENTION]

### [PROBLEMS TO BE SOLVED BY THE INVENTION]

The present invention resides in providing a fuel cartridge for fuel cells which is capable dispensing liquid fuel received in a container by a manual operation in a safe and simple manner, and which has a a novel construction.

### [MEANS FOR SOLVING THE PROBLEMS]

In order to achieve the above object, in the present invention, there is provided a fuel cell cartridge for fuel cells which is provided with a flexible cartridge having a liquid fuel for a fuel cell received therein, and a connecting element that is arranged at an a port portion of said container and is connected with a fuel cell so as to fill the fuel thereinto, and which is **characterized in that** an extendable and contractible portion is formed in at least a part of said container, and said connecting element is provided with a valve mechanism portion which is held in a normally closed state in a free state thereof, and is opened when the connecting element is connected with the fuel cell.

Said container can be a single-layer container composed of an olefin series resin or a multi-layer container composed of one kind of or a plurality of kinds of olefin series resins.
In addition, said container can be a single-layer container composed of a polyester series resin or a multi-layer container composed of one kind of or a plurality of kinds of polyester series resins including a polyester series resin.
Moreover, said container can have a multi-layer structure, and can be a container of a multi-layer structure which has at least one layer composed of an olefin series resin and at least one layer composed of a polyester series resin, with these layers being laminated with one another.

It is preferable that at least a part of an outer periphery of said container be covered with a cover that serves to protect said container.
In addition, it is preferable to construct the container and the cover as follows. That is, the container takes a bottomed cylindrical shape, and has the extendable and contractible portion formed on a cylindrical body portion thereof, and the cover is provided, as a plurality of cover members, with a cover main body that has a body cover portion to cover the body portion from either one of a port portion side and a bottom portion side of the container, and a push-in cover member that has a slide cylindrical portion to cover the other of the port portion side and the bottom portion side of the container and is fitted to the body cover portion of said cover main body for sliding movement with respect thereto.

It is preferable that a stroke limiting member for limiting an amount of push-in stroke of said push-in cover member when said push-in cover member is pushed in to extend and contract the extendable and contractible portion be provided on at least one of said cover member and said push-in cover member.
It is preferable that a stroke limiting member be arranged at a start end or a terminal end of the push-in stroke of said push-in cover member, or at each of the start end and the terminal end thereof.
In addition, it is preferred that provision be made for a stopper that restricts the sliding movement of said push-in cover member when the connecting element is disconnected with the fuel cell.

Said push-in cover member may be constructed to cover the bottom portion side, or may be constructed to cover the port portion side.

It can be constructed such that the extendable and contractible portion of the container is formed in at least a part which is covered with the slide cylindrical portion of the push-in cover member. Such a construction includes a case in which the extendable and contractible portion is longer than the slide cylindrical portion, and also includes a case in which the body portion of the container is entirely extendable and contractible.
The extendable and contractible portion of the container may be formed at a location away from at least a part which is covered with the slide cylindrical portion of the push-in cover member.

It is preferable that a cap be provided which covers the connecting element when the fuel cell cartridge is out of use, and which serves as a presser portion that is engaged with the container or the push-in cover member to push in the container when the fuel cell cartridge is in use.

It may be constructed such that an extendable and contractible portion is formed on the body portion of said container so as to extend and contract in a direction to cross a central axis thereof, and that the cover is composed of two cover members that are assembled with each other in the body portion of the container in a manner so as to be movable relative to each other in a direction in which the extendable and contractible portion extends and contracts.
It is preferable to use a bellows mechanism for said extendable and contractible portion.

### [EFFECTS OF THE INVENTION]

According to the present invention, by connecting the connecting element with the fuel cell and contracting the extendable and contractible portion of the container, the liquid fuel therein can be filled into the fuel cell.
Since the valve mechanism portion, which is in a normally closed state in a free state thereof and is opened when connected with the fuel cell, is provided on the connecting element, there is no fear that the liquid fuel might leak in the state of the connecting element being not connected with the fuel cell.

In addition, by using an olefin series resin for the container, it is possible to replenish the fuel cell with the liquid fuel by means of a small pressing force.
Here, note that in this description, as long as no special mention is made, olefin series resins generally represent commonly used resins such as polyethylene, polypropylene, etc., and resins composed of olefin series resins blended in accordance with purposes or the like.
In addition, by using a polyester series resin such as PET for the container, it is possible to obtain a container which is excellent in permeation resistance to the content in the container and which is high in strength.
Also, note that in this description, as long as no special mention is made, polyester series resins generally represent commonly used resins such as polyethylene terephthalate, polyethylene naphthalate, etc., and resins composed of polyester series resins blended in accordance with purposes or the like.
In addition, by forming the container having a multi-layer construction composed of a polyester series resin (s) and a olefin series resin(s), it is possible to obtain a well-balanced container which is excellent in permeation resistance to the content therein and which can replenish or inject the liquid fuel with a small pressing force.

Moreover, if a cover is provided which covers at least a part of an outer periphery of the container, it will be possible to protect the container by means of the cover, thus making it possible to prevent damage, breakage or the like of the container.
In addition, if it is constructed such that an extendable and contractible portion is formed in the body portion so that the push-in cover member is pushed into the cover main body covering the body portion to compress the extendable and contractible portion, as referred to above, the liquid fuel will be able to be injected in an efficient manner.

Further, with the provision of a stroke limiting member that limits or restricts an amount of push-in stroke of the push-in cover member, it is possible to prevent an excessive amount of the liquid fuel from being flown out by means of the stroke limiting member, and hence an electrolyte film of the fuel cell can be protected.
In addition, by providing a stroke limiting member at a start end of the stroke, too, even if the container is exposed under a high temperature environment to raise its internal pressure to cause the container to inflate, it is possible to prevent the coming-off of the push-in cover member. Also, by the provision of stroke limiting members at both of a start end and a terminal end of the stroke, both of the above-mentioned advantageous merits can be obtained.
Furthermore, by the provision of a stopper used for the time when there is no connection with the fuel cell, it is possible to prevent misoperations such as a rise in the internal pressure of the container due to operational errors or mistakes at the time of non use.

In addition, if the push-in cover member is arranged at the bottom portion side, one will be able to replenish the fuel cell in an easy and simple manner by pushing in the push-in cover member by means of his or her fingers while grasping the cover main body with one hand at the time of replenishing the liquid fuel into the fuel cell.
Further, in case where the push-in cover member is arranged at the port portion side, one can relatively push the push-in cover member into the cover main body by grasping the cover main body with hand and pushing it toward the fuel cell, so it is easy for the one to apply his or her force at the time of injecting the liquid fuel.

In addition, if an extendable and contractible portion is arranged in a part that is covered with the push-in cover member, the extendable and contractible portion is directly compressed by means of the push-in cover member, and hence the extendable and contractible portion can be extended and contracted in a stable manner.
Further, if an extendable and contractible portion is arranged at a location away from the slide cylindrical portion, those portions which are in fitting engagement with each other move while maintaining the same positional relation therebetween even when the slide cylindrical portion is stroked or moved, as a result of which the slide cylindrical portion does not come into the inner periphery of the cover main body, thus making it possible to increase the volume of the container and hence to improve the volume efficiency thereof. Also, in case where the entire surface of the body portion is made capable of extending and contracting, an amount of stroke for each operation can be made larger, so an amount of fuel to be discharged per stroke can be increased.

Moreover, if a cap is provided which serves as a presser portion that is engaged with the container or the push-in cover member to push in the container, it is possible to prevent the cap from being left behind and lost at the time of replenishment.
In addition, the cover can be formed of the cover main body alone, and the cap can also be used as the push-in cover member.
Also, by constructing such that an extendable and contractible portion is formed on the body portion of the container so as to extend and contract in a direction to cross a central axis thereof, and that the cover is composed of two cover members that are assembled with each other in a manner so as to be movable relative to each other in the extension and contraction direction, the liquid fuel can be injected only by grasping the cover.
In addition, if the extendable and contractible portion is comprised of a bellows mechanism, it will be able to be made into a compact structure.

### [BRIEF DESCRIPTION OF THE DRAWINGS]

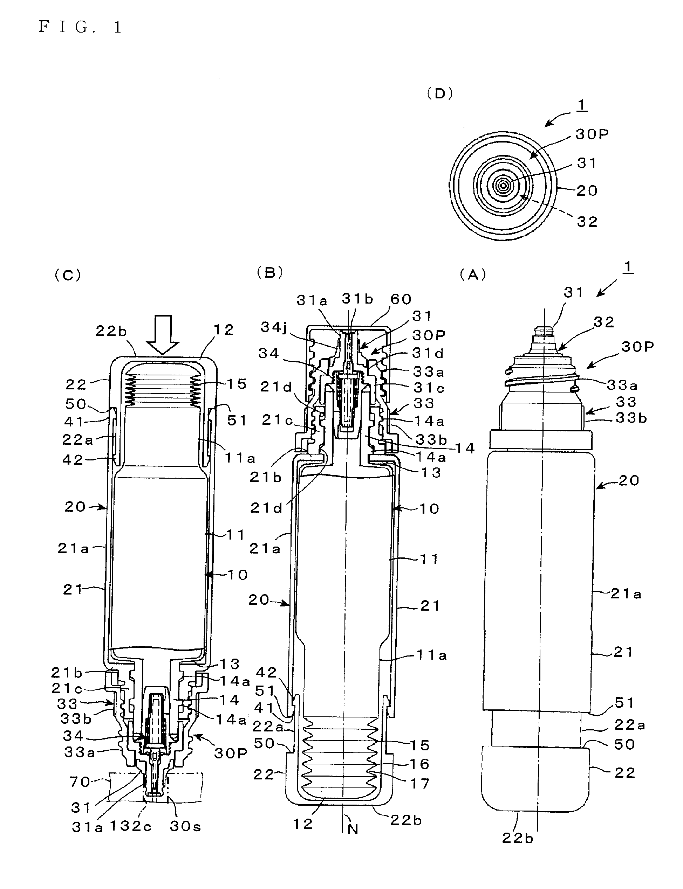

[Fig. 1] Fig. 1 shows a fuel cartridge for fuel cells according to a first embodiment of the present invention, wherein (A) in this figure is a front elevational view thereof in a state in which a cap has been removed, (B) in this figure is a front elevational cross sectional view thereof, (C) in this figure is a front elevational cross sectional view thereof in a state in which a push-in cover member has been pushed in, and (D) in this figure is a top plan view of (A) in this figure.

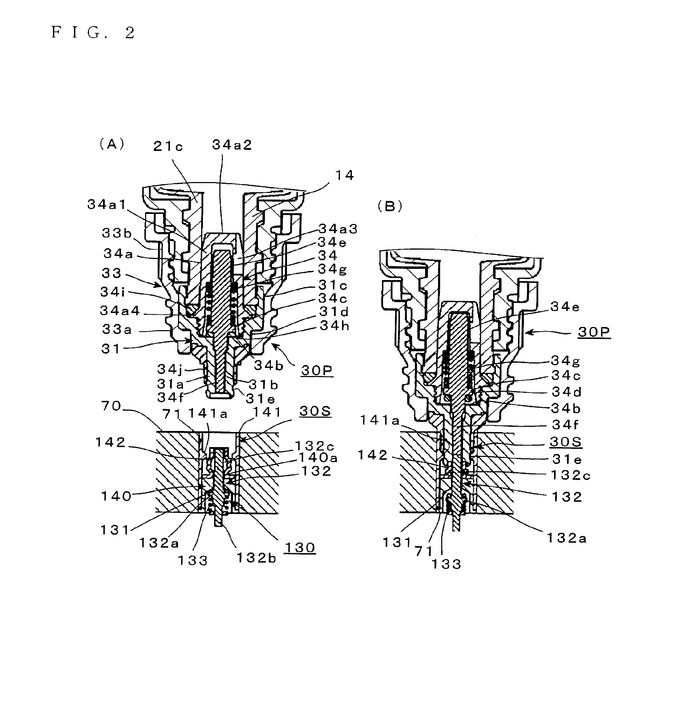

[Fig. 2] (A) and (B) in Fig. 2 are explanatory views of a disconnected state and a connected state, respectively, of a coupler which is comprised of a plug and a socket at a fuel cell side, of the cartridge of Fig. 1.

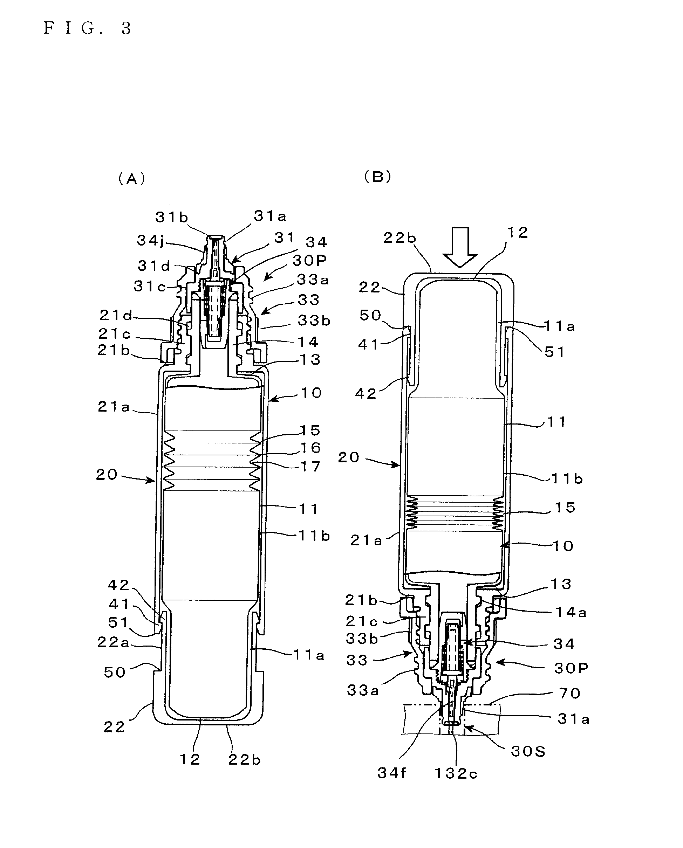

[Fig. 3] Fig. 3 shows a fuel cartridge for fuel cells according to a first modification of the first embodiment of Fig. 1, wherein (A) in this figure is a front elevational cross sectional view thereof, and (B) in this figure is a front elevational cross sectional view in a state in which a push-in cover member has been pushed in.

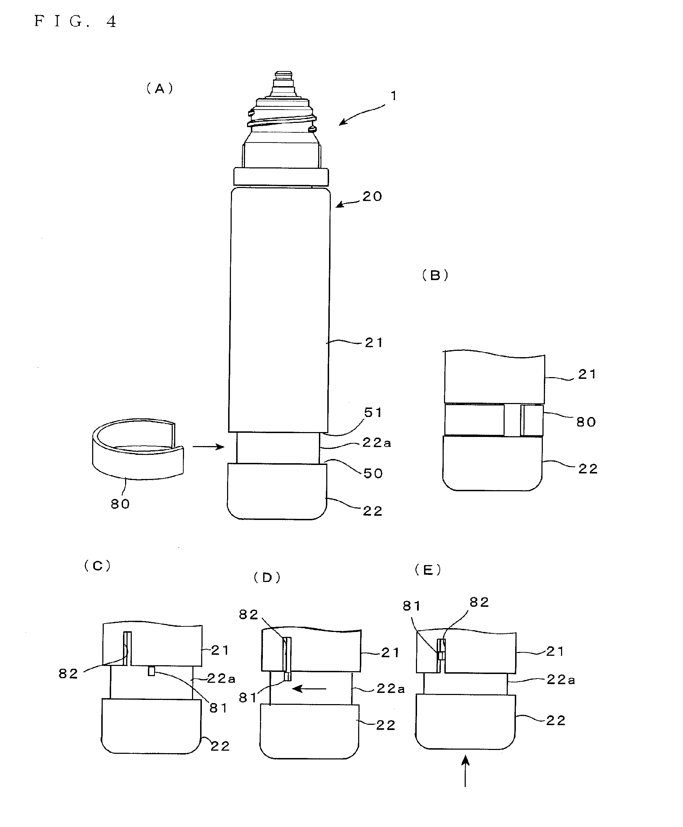

[Fig 4] (A) in Fig. 4 is an explanatory view showing a specific construction example of a stopper at the time of nonuse which is used in the fuel cartridge for fuel cells of Fig. 3, (B) in this figure is a partial front elevational view thereof in an applied state of a stopper, and (C) through (E) are explanatory views showing other states of the stopper.

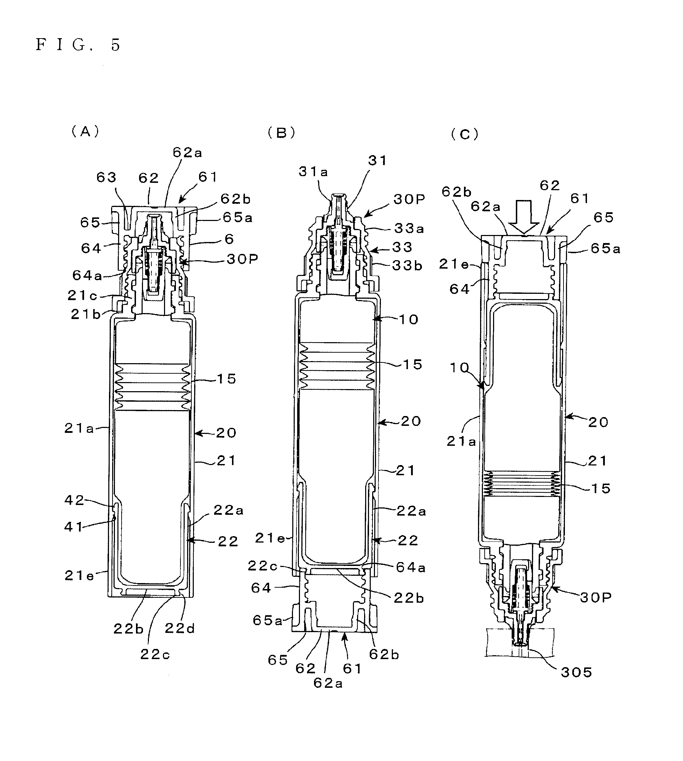

[Fig 5] Fig. 5 shows a further modification of the fuel cartridge for fuel cells of Fig. 3, wherein (A) in this figure is a front elevational cross sectional view thereof in a state in which a cap is attached, (B) in this figure is a front elevational cross sectional view thereof in a state in which the cap is attached to a push-in cover member, and (C) in this figure is a front elevational cross sectional view in a state in which the push-in cover member has been pushed in by the use of the cap.

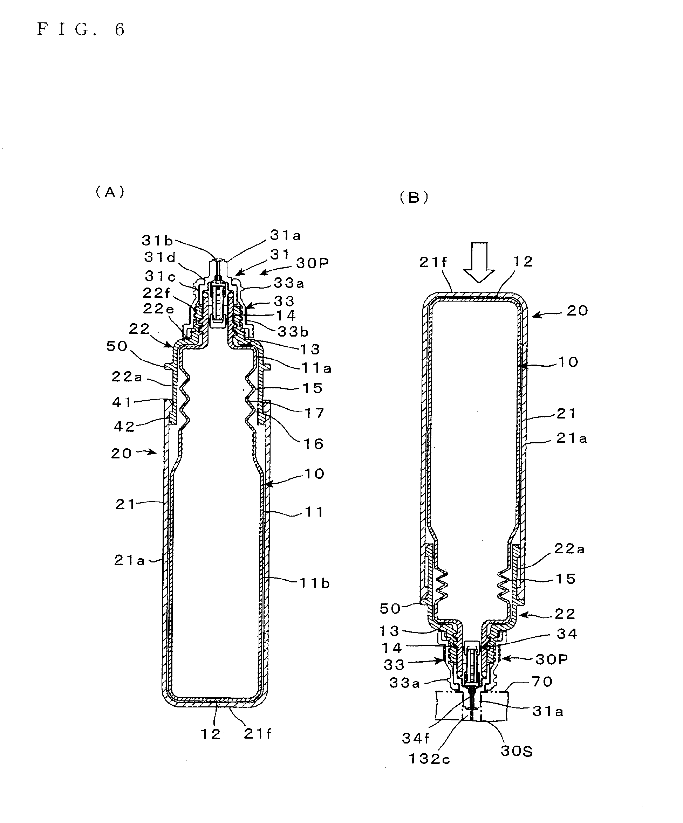

[Fig. 6] Fig. 6 shows a fuel cartridge for fuel cells according to a second modification of the first embodiment of Fig. 1, wherein (A) in this figure is a front elevational cross sectional view thereof, and (B) in this figure is a front elevational cross sectional view in a state in which a push-in cover member has been pushed in.

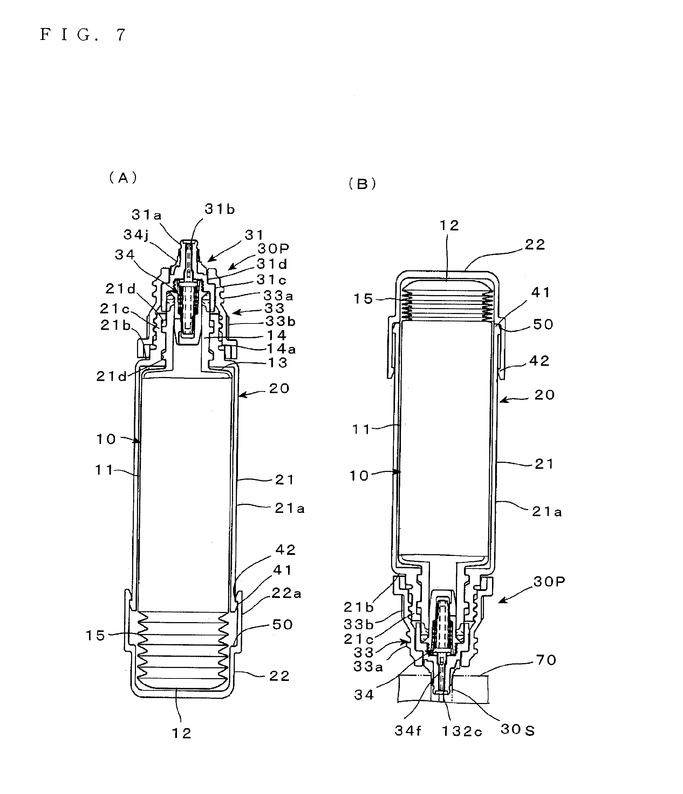

[Fig. 7] Fig. 7 shows a fuel cartridge for fuel cells according to a third modification of the first embodiment of Fig. 1, wherein (A) in this figure is a front elevational cross sectional view thereof, and (B) in this figure is a front elevational cross sectional view in a state in which a push-in cover member has been pushed in.

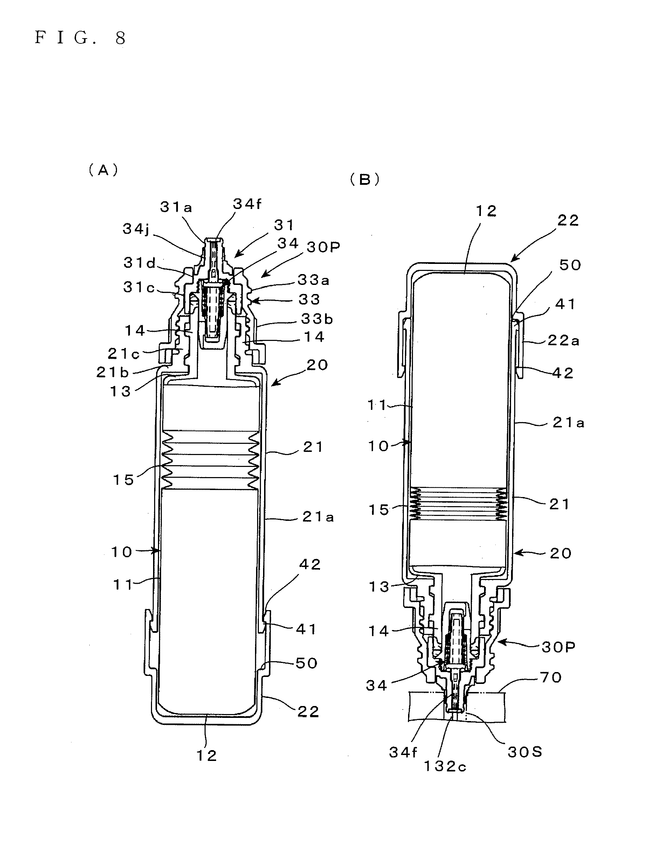

[Fig 8] Fig. 8 shows a fuel cartridge for fuel cells according to a fourth modification of the first embodiment of Fig. 1, wherein (A) in this figure is a front elevational cross sectional view thereof, and (B) in this figure is a front elevational cross sectional view in a state in which a push-in cover member has been pushed in.

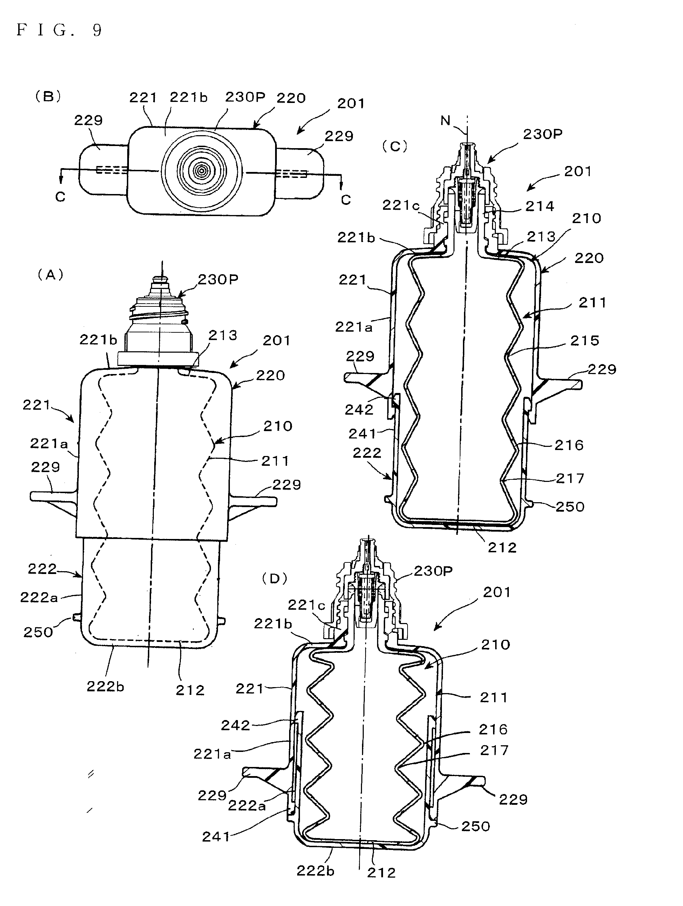

[Fig. 9] Fig. 9 shows a fuel cartridge for fuel cells according to a second embodiment of the present invention, wherein (A) in this figure is a front elevational view thereof, (B) in this figure is a plan view thereof, (C) in this figure is a cross sectional view thereof along line C - C (B) in this figure, and (D) in this figure is a cross sectional view thereof at the time of squeezing.

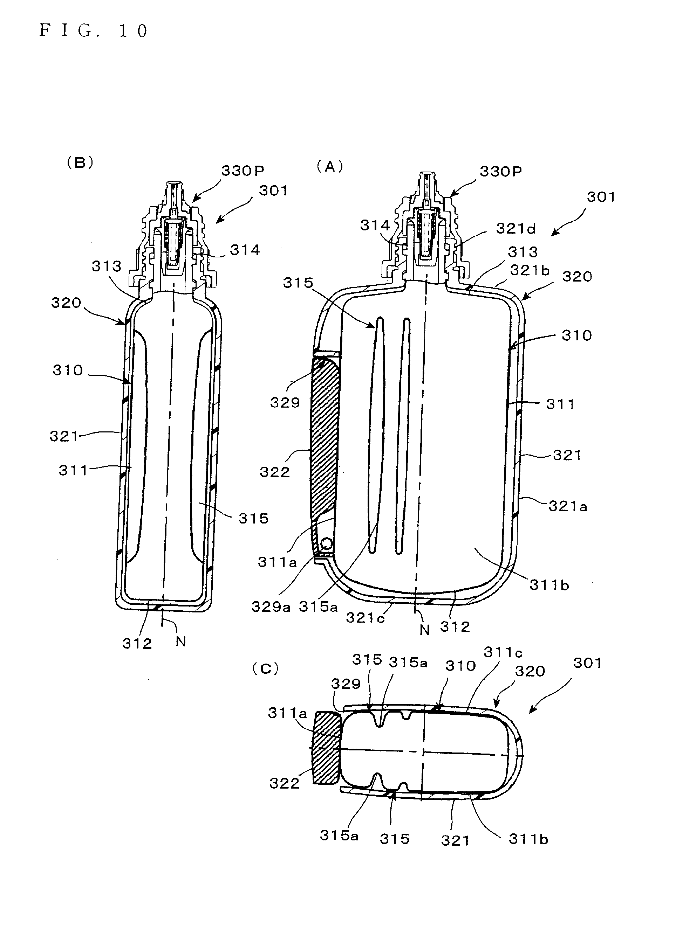

[Fig. 10] Fig. 10 shows a fuel cartridge for fuel cells according to a third embodiment of the present invention, wherein (A) in this figure is a front elevational cross sectional view thereof, (B) in this figure is a side elevational vertical cross sectional view thereof, and (C) in this figure is a cross sectional view thereof.

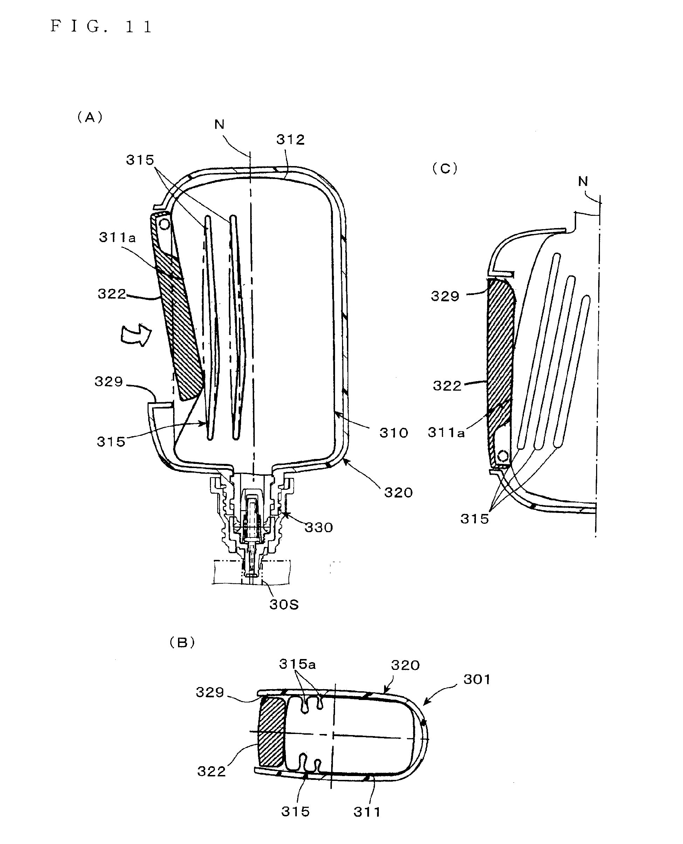

[Fig. 11] (A) in Fig. 11 is a front elevational vertical cross sectional view at the time of squeezing the fuel cartridge of Fig. 7, (B) in this figure is a side elevational cross sectional view of (A) in this figure, and (C) in Fig. 11 is a half vertical cross sectional view thereof showing an example in which the direction of extension and contraction of a bellows portion is different.

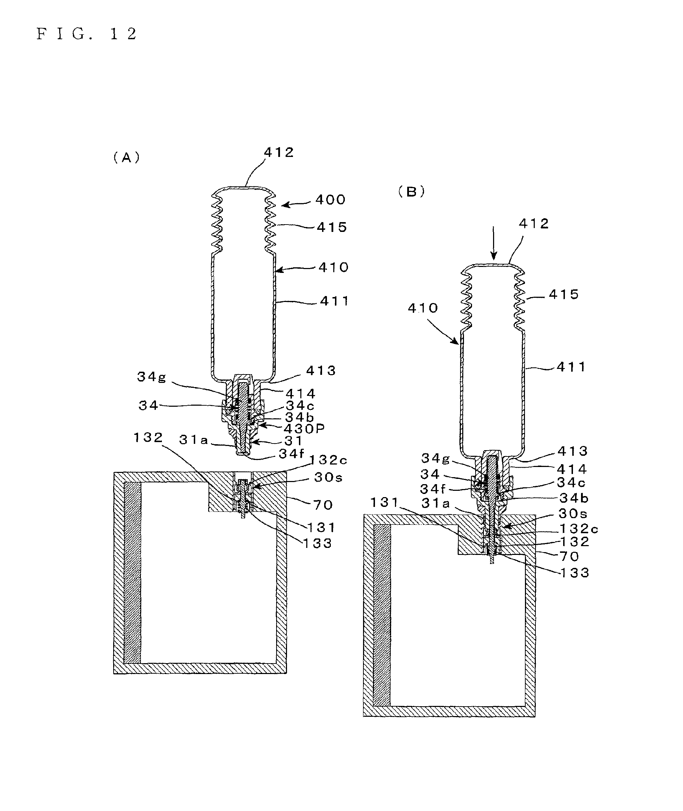

[Fig. 12] Fig. 12 shows a fuel cartridge for fuel cells according to a fourth embodiment of the present invention, wherein (A) in this figure is a front elevational cross sectional view thereof, and (B) in this figure is a front elevational cross sectional view thereof in a state in which fuel is filled.

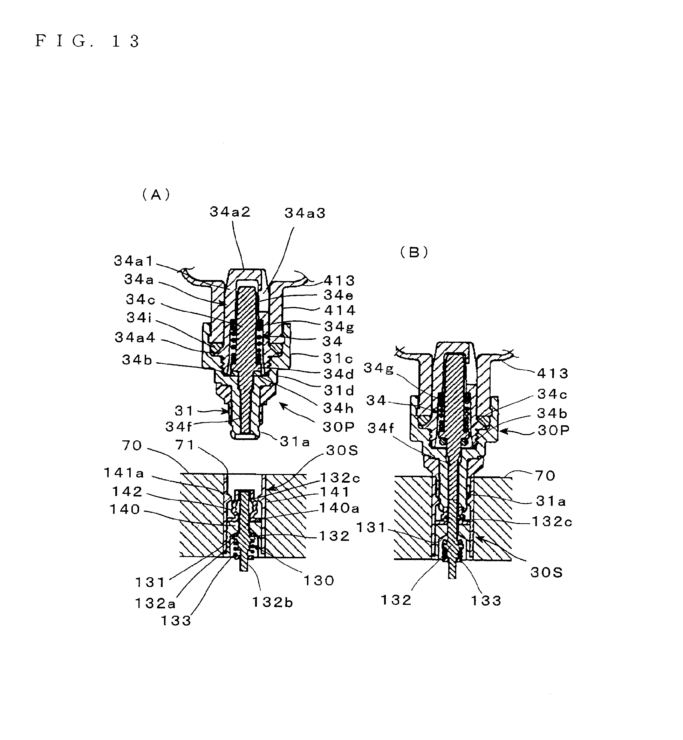

[Fig. 13] (A) and (B) in Fig. 13 are explanatory views of a disconnected state and a connected state, respectively, of a coupler which is comprised of a plug and a socket at a fuel cell side, of the cartridge of Fig. 12.

### [Explanation of Symbols]

- 1: a fuel cartridge for fuel cells
- 10: a container
- 11: a body portion
- 11: a small-diameter portion
- 12: a bottom portion
- 13: a shoulder portion
- 14: a port portion
- 14a: annular convex portions
- 15: a bellows portion (extendable and contractible portion)
- 16: a convex portion
- 17: a concave portion
- 20: a cover
- 21: a cover main body
- 21a: a body cover portion
- 21b: a shoulder cover portion
- 21c: a port cover portion
- 21d: an annular groove
- 21e: a cover extended portion
- 21f: a bottom cover portion
- 22: a push-in cover member
- 22a: a slide cylindrical portion
- 22b: a bottom cover portion
- 22c: an annular convex portion
- 22d: an outwardly directed annular protrusion
- 22e: a shoulder cover portion
- 22f: a port cover portion
- 30P: a plug (connecting element)
- 31: a plug main body
- 31a: a projected connecting portion
- 31b: a flow passage
- 31c: a base portion
- 31d: a stepped portion
- 31e: an annular groove
- 33: a holding cap
- 33a: a small-diameter holder
- 33b: a large-diameter holder
- 34: a valve mechanism portion
- 34a: a valve holder
- 34b: a valve seat
- 34c: a valve
- 34d: a valve body
- 34e: a guide shaft
- 34f: a valve stem
- 34g: a spring
- 34h: a seal ring
- 30S: a socket
- 130: a valve mechanism portion
- 131: a valve seat
- 132: a valve
- 132a: a valve body
- 132b: a guide shaft
- 132c: a valve stem
- 133: a spring
- 140: a socket member
- 140a: a through hole
- 141: a housing
- 141a: an annular convex portion
- 142: a rubber holder
- 41, 42: start end stoppers
- 50: a terminal end stopper
- 51: an open end
- 60: a cap
- 70: a fuel cell
- 71: an attachment hole
- 80: a stopper ring
- 81: a stopper convex portion
- 82: a slit
- 61: a cap
- 62: a cap main body
- 62a: a top plate portion
- 62b: an inner cylindrical portion
- 63: an annular connecting portion
- 64: a threaded cylindrical portion
- 64a: an inwardly directed annular protrusion
- 65: an outer cylindrical portion
- 65a: stopper ribs
- 201: a fuel cartridge
- 210: a container
- 211: a body portion
- 212: a bottom portion
- 213: a shoulder portion
- 214: a port portion
- 215: a bellows portion (extendable and contractible portion)
- 216: convex portions
- 217: concave portions
- 220: a cover
- 221: a cover main body
- 221a: a body cover portion
- 221b: a shoulder cover portion
- 221c: a port cover portion
- 222: a push-in cover member
- 222a: a slide cylindrical portion
- 222b: a bottom cover portion
- 228: side walls
- 229: finger engagement portions
- 230P: a plug
- 241, 242: start end stoppers
- 250: a terminal end stopper
- N: a central axis
- 301: a fuel cartridge
- 310: a container
- 311: a body portion
- 311a: a side surface
- 311b: a front surface
- 311c: a rear surface
- 312: a bottom portion
- 313: a shoulder portion
- 314: a port portion
- 315: a bellows portion (extendable and contractible portion)
- 315a: a vertical groove
- 320: a cover
- 321: a cover main body
- 321a: a body cover portion
- 321b: a shoulder cover portion
- 321c: a bottom cover portion
- 321d: a port cover portion
- 322: a push-in cover member
- 329: an opening portion
- 329a: a pivot portion
- 330P: a plug
- 400: a fuel cartridge for fuel cells
- 410: a container
- 411: a body portion
- 412: a bottom portion
- 413: a shoulder portion
- 414: a port portion
- 415: a bellows portion (extendable and contractible portion)
- 430P: a plug

### [DETAILED DESCRIPTION OF THE PREFERRED EMBODIMENTS]

Now, the present invention will be described in detail below based on illustrated preferred embodiments thereof.
Fig. 1 shows a fuel cartridge for fuel cells according to a first embodiment of the present invention.
That is, as shown in Fig. 1, this fuel cartridge 1 for fuel cells is provided with a flexible container 10 in which a liquid fuel is stored, and a cover 20 of high rigidity that covers an outer periphery of this container 10 thereby to protect the container 10, wherein a plug 30P of a coupler, which acts as a connecting element adapted to be connected with a fuel cell for filling the fuel thereinto, is provided at an opening or port portion of the container 10.
A bellows portion 15, which constitutes a bellows mechanism that is an extendable and contractible portion having elasticity, is formed in the container 10, and the cover 20 is composed of a cover main body 21 and a push-in cover member 22, which serve as a plurality of cover members that are connected with each other in a manner so as to be movable to each other in a direction to extend and contract the bellows portion 15.
As the liquid fuel, there can be used a variety of kinds of liquid fuels such as methanol, formaldehyde, formic acid, ethanol, acetaldehyde, acetic acid, butane, boron hydride, and so on, which are available as fuel for the fuel cells.

The container 10 is of a bottomed cylindrical shape, and is constructed to be provided with a body portion 11 of a hollow cylindrical shape, a bottom portion 12 that closes a lower end of the body portion 11, a shoulder portion 13 that serves to squeeze or throttle an upper end of the body portion 11, and a port portion 14 of a cylindrical shape that protrudes upwardly from the shoulder portion 13.
Although a material for the container can be appropriately selected in accordance with the liquid fuel, soft olefin series resin materials are used in this embodiment. The container may be a single-layer or multi-layer container composed of a single kind of or a plurality of kinds of olefin series resin(s), or may be a single kind of polyester series resin, or a plurality of kinds of polyester series resins blended with one another.
Here, note that in this embodiment, the container 10 has a multi-layer structure, which includes, as its layer structure, multiple layers comprising polypropylene (PP) /ripro /linear low-density polyethylene (L-LDPE) /cyclic polyolefin /linear low-density polyethylene (L-LDPE) /a blend of high-density polyethylene and linear low-density polyethylene (HDPE + L-LDPE), arranged in this order from the outer side, in consideration of the permeation resistance of the content in the container, the prevention of melting of impurities into the content, and operability as the container, but in the present invention, it is not limited to such a layer structure. In addition, the thickness or the like of each of these layers can be appropriately set in consideration of the characteristics, the amount of filling, the operation condition, and so on of the content.
In the case of the single layer, a single HDPE (high-density polyethylene) unit or component or a blend of HDPE + L-LDPE (linear low-density polyethylene) is preferably used in consideration of the impurity melting property thereof.
In the case of the multiple layers, it is desirable to improve permeability to the content by using a COC (cyclic polyolefin) resin for intermediate layers and at the same time to form the inner and outer layers from olefin series resins (HDPE). In addition, it is also desired that the port portion, into which the plug 30P is fitted, do not deform.
Moreover, in the case of using polyester series resins, the container has excellent permeability, is high in rigidity and suitable for mass production thereof, and hence it is preferably used as a container in the present invention. Here, note that a polyethylene terephthalate resin in the polyester series resins uses metal catalysts such as antimony, germanium, etc., in the production process thereof, but in the present invention, it is desirable, from the viewpoint of the impurity melting prevention, to the content to use a polyethylene terephthalate resin produced by the use of a titanium-based catalyst.

The container 10 is constructed such that the bottom portion 12 can be pushed into the port portion 14 by means of the push-in cover member 22, and the body portion 11 of the container 10 has the bellows portion 15 formed at its bottom-side portion. This bellows portion 15 is extendable and contractible in a direction in which it is pushed in by the push-in cover member 22, i.e., in the direction of a central axis N of the body portion 11.

The bellows portion 15 takes a shape in which large-diameter convex portions 16 and small-diameter concave portions 17 are repeated in an alternate manner, and the shape of each of the convex portions 16 is triangular in the illustrated example. However, the shape of the bellows portion 15 is not limited to the triangular shape, but can take various shapes such as, for example, a trapezoidal shape, a continuous circular arc shape, etc., which are able to extend and contract in the direction of the central axis thereof. The bellows portion 15 is in an extended state in its free or unloaded condition, but is contracted by pushing in the push-in cover member 22 and returns under its own elasticity to the extended state when no push-in force acts thereon.

The cover 20 is constructed to be provided with the cover main body 21 that has a body cover portion 21a covering the body portion 11 from either one of a port portion 14 side and a bottom portion 12 side of the container 10, e.g., from the port portion 14 side in this example, and the push-in cover member 22 that has a slide cylindrical portion 22a which covers the bottom portion 12 of the container 10 and is slidably fitted into the body cover portion 21a of the cover main body 21, wherein when the liquid fuel is to be filled, the cover main body 21 can be grasped by an operator so that the push-in cover member 22 can be pushed in by one hand of the operator.
The cover main body 21 is provided with the above-mentioned body cover portion 21a, a shoulder cover portion 21b that covers a shoulder portion of this body cover portion 21a from an upper end thereof, a cylindrical port cover portion 21c that covers the port portion 14. The port cover portion 21c is fixed to the port portion 14 so as not to come off therefrom.

The body portion the cover 21a has a cylindrical shape and extends from the shoulder portion of the body portion 11 of the container 10 up to the vicinity of the bottom portion 12 thereof. The shoulder cover portion 21b extends in an inward direction from the upper end of the body cover portion 21a in an annular manner so as to cover the shoulder portion 13, and the port cover portion 21c protrudes in an upward direction from an inner diameter end of the shoulder cover portion 21b along an outer periphery of the port portion in a cylindrical manner.
Annular convex portions 14a are formed on the outer periphery of the port portion 14 of the container at two locations vertically spaced from each other, and on the other hand, annular grooves 21d, into which the annular convex portions 14a are fitted, are formed on the port cover portion 21c of the cover main body 21, whereby the port portion 14 is prevented from coming off the port cover portion 21c in the axial direction. The fixing of the port portion 14 and the port cover portion 21c can be made by threaded engagement, but, more preferably, by means of fitting engagement from the viewpoint of prevention of the disassembly thereof.

On the other hand, the push-in cover member 22 is constructed to cover the bottom portion 12 side of the container 10, and is provided with a bottom cover portion 22b that covers the bottom portion 12 of the container, and the slide cylindrical portion 22a of a cylindrical shape that extends in an upward direction from an outer diameter end of the bottom cover portion 22b, wherein the bottom portion 12 of the container 10 is in abutment with the bottom cover portion 22b.
The slide cylindrical portion 22a of this push-in cover member 22 has an inner fitting engagement construction in which it is fitted into an inner periphery of the body cover portion 21a of the cover main body 21.
Since the slide cylindrical portion 22a is of the inner fitting engagement construction, the body portion 11 of the container 10 is squeezed or throttled to form a small-diameter portion 11a at a part thereof near the bottom portion 12 corresponding to the slide cylindrical portion 22a by an amount of space for the slide cylindrical portion 22a in order to avoid interference with the slide cylindrical portion 22a. In this example, the bellows portion 15 is formed in this small-diameter portion 11a, and the length of the small-diameter portion 11a is set to a length equal to the length of the slide cylindrical portion 22a added by the length of the bellows portion 15.

In addition, start end stoppers 41, 42, which are engageable with each other in the axial direction in the most extended position of the push-in cover member 22, are formed on the inner periphery of the body cover portion 21a and the outer periphery of the slide cylindrical portion 22a, respectively, so as to protrude therefrom. In the illustrated example, the start end stopper 41 at the body cover portion 21a side is formed at the inner periphery of the body cover portion 21a at an open end thereof, and the start end stopper 42 at the slide cylindrical portion 22a side is formed on the outer periphery of the slide cylindrical portion 22a at an insertion direction tip end portion thereof. In the free state, the bellows portion 15 is caused to extend, by an elastic restoring force thereof, up to a position in which the start end stoppers 41, 42 are placed into engagement with each other, and the bottom portion 12 of the container 10 is in abutment with the bottom cover portion 22b of the push-in cover member 22.
These start end stoppers 41, 42 function as a coming-off preventing mechanism for the push-in cover member 22, and the start end stoppers 41, 42 have engagement surfaces adapted to be engaged with each other at an angle of 90 degrees, and hence are not easily released or disengaged from each other. In addition, each start end stopper has a tip end portion in the direction of insertion shaped into a sloped or inclined surface so as to enable or expedite assembly. Even if the cartridge is exposed under a high temperature environment to raise the internal pressure of the container to cause the container to deform, these start end stoppers 41, 42 serve to prevent the coming-off of the push-in cover member 22.

On the other hand, the slide cylindrical portion 22a has a terminal end stopper 50 formed on the outer periphery thereof to protrude therefrom, the terminal end stopper 50 acting as a stroke limiting member for limiting to a predetermined amount an amount of push-in stroke of the push-in cover member 22, i.e., an amount of contraction of the bellows portion 15 of the container 10 at the time when the push-in cover member 22 is pushed in to cause the bellows portion 15 to be contracted. This terminal end stopper 50 protrudes to an outer peripheral side from the slide cylindrical portion 22a with a thick thickness so as to be arranged in opposition to an open end 51 of the body cover portion 21a in an axial direction thereof, whereby it is placed into engagement with the open end 51 of the body cover portion 21a thereby to limit or restrict the amount of push-in of the push-in cover member 22.
Thus, in this embodiment, the start end and the terminal end of the push-in stroke of the push-in cover member 22 are limited to provide a prescribed amount of stroke by means of the start end stoppers 41, 42 and the terminal end stopper 50, whereby an amount of fuel to be injected by one push-in operation can be measured in an accurate manner.

On the plug 30P, there is provided a valve mechanism portion 34 which is held in a normally closed state in a free state thereof, and is opened when the plug is connected with a fuel cell 70.
In this embodiment, as shown in (C) in Fig. 1 and (A) and (B) in Fig. 2, the plug 30P is adapted to be detachably connected with a socket 30S which is provided on the fuel cell 70, and the plug 30P and the socket 30S together constitute a coupler.
The plug 30P is provided with a plug main body 31 having a projected connecting portion 31a which is adapted to be inserted in the socket 30S, a holding cap 33 for fixedly holding the plug main body 31, and the valve mechanism portion 34 which serves to open and close a flow passage 31b formed in the projected connecting portion 31a.
The valve mechanism portion 34 is constructed in such a manner that it is held in the normally closed state in its free state, and is opened when connected with the fuel cell.
The plug main body 31 is provided with a base portion 31c of a large diameter that is fitted into the port portion 14 of the container 10, and a stepped portion 31d that is arranged between the projected connecting portion 31a and the base portion 31c and gradually increases in diameter in a stepwise manner. In addition, the projected connecting portion 31a has an annular groove 31e formed on an outer periphery of a tip end portion thereof.

The holding cap 33 has a small-diameter holder portion 33a that is fitted into the plug main body 31, and a large-diameter holder portion 33b that is larger in diameter than this small-diameter holder portion 33a and is threaded into the port cover portion 21c. The large-diameter holder portion 33b, being formed on its inner periphery with a female thread, is threaded over and fixed to the port cover portion 21c which has a male thread formed on an outer periphery thereof. The small-diameter holder portion 33a has a male thread formed on an outer periphery thereof, and a cap 60 covering the plug 30P is threaded over and fixed to the small-diameter holder portion.

As shown in (A) and (B) in Fig. 2, the valve mechanism portion 34 is provided with a valve the holder 34a that is fitted into the inner perphery of the port portion 14 of the container 10, a valve seat 34b that is formed on an end face of the plug main body 31 at a container inner side thereof, a valve 34c that it is held by a valve holder 34a for axial movement relative thereto in a manner such that it is able to move toward and away from the valve seat 34b, and a spring 34g that serves to always urge this valve 34c in a direction to push it against the valve seat 34b.

The valve 34c is provided with a disk-shaped valve body 34d, a guide shaft 34e that extends downwardly from a lower surface of the valve body 34d along a central axis thereof, and a valve stem 34f that extends upwardly from the center of an upper surface of the valve body 34d along the central axis thereof to be slidably inserted into an inner periphery of the projected connecting portion 31a of the plug main body 31. The valve body 34d is arranged so as to contact with and separate from the valve seat 34b through a seal ring 34h made of a rubber-like elastic material.
In addition, the valve holder 34a takes a bottomed cylinder shape with a flange, and has a cylindrical portion 34a1 that is fitted into the inner periphery of the port portion 14, and a flange portion 34a4 that is in sealing contact with the open end of the port portion 14 of the container through a sealing member 34i. The movement of the guide shaft 34e is restricted or limited to a predetermined amount by means of a bottom portion 34a2 of the valve holder. In addition, the cylindrical portion 34a1 of the valve the holder 34a has a through hole 34a3 formed therethrough at a location near its bottom portion, which is in fluid communication with the interior of the container.

The guide shaft 34e serves to guide the direction of movement of the valve body 34d in an axial direction thereof, and is held in an inner periphery of the valve holder 34a for sliding movement in the axial direction. On an outer periphery of the guide shaft 34e, there are formed a plurality of grooves for permitting the liquid fuel to pass therethrough.
The valve stem 34f is formed integral with the valve 34c, and is slidably inserted into an inner periphery of the projected connecting portion 31a upwardly from the valve body 34d of the valve 34c On the outer periphery of this valve stem 34f, too, there are formed a plurality of grooves for permitting the liquid fuel to flow therethrough. The valve stem 34f has an upper end thereof which is located substantially in the vicinity of a tip end opening portion of the projected connecting portion 31a in its closed state.

Now, the socket 30S will be described.
This socket 30S is provided with a valve mechanism portion 130 that has a valve 132, and a spring 133 which acts as an urging means for contantly urging the valve 132 in its closing direction, wherein it is constructed such that upon connection of the plug 30P, the valve 132 is caused to move in a valve opening direction against the spring force of the spring 133.

The valve mechanism portion 130 is assembled to a socket member 140 attached or fitted into an inner periphery of an attachment hole 71 formed in the fuel cell 70. A cylindrical housing 141 is fitted into the inner periphery of the attachment hole 71, and in the illustrated example, the socket member 140 is fixedly secured to the inner periphery of the attachment hole 71 through the housing 141. The socket member 140 is fixed at a position which is at an inner side from an opening portion of the attachment hole 71 lying outside the fuel cell, so that a space in the housing 141 at the opening portion side becomes a connection space into which the projected connecting portion 31a of the plug 30P is to be inserted. In addition, the housing 141 is formed on its inner periphery facing the connection space with an annular convex portion 141a that is in engagement with the annular groove 31e formed on the outer periphery of the projected connecting portion 31a.

A valve seat 131 is formed on an end face of the socket member 140 at its battery interior side, and the valve 132 is able to contact with and separate from the valve seat 131 from the battery interior side. The valve 132 is urged or pressed against the valve seat 131 with a predetermined pressure by means of the spring force of a spring 132, so that it is normally held in a closed state.

The valve 132 is provided with a disk-shaped valve body 132a, a guide shaft 132b that extends downwardly from a lower surface of the valve body 132a along its central axis, and a valve stem 132c that extends upwardly from the center of an upper surface of the valve body 132a along its central axis to pass through the through hole 140a in the socket member 140 to protrude into the interior of the connection space, wherein a lot of grooves, which constitute a flow passage, are formed on an outer periphery of the valve stem 132c.
In addition, the socket member 140 is provided with a rubber holder 142 which is arranged so as to cover the valve stem 132c and which acts as a resilient holder. The rubber holder 142 is extendable and contractible in the axial direction, so that upon connection of the plug 30P, a tip end of the rubber holder 142 is placed in contact with a tip end face of the projected connecting portion 31a in a sealed state, thus making it possible to ensure a flow passage at an inner side thereof in a sealed manner.

Now, reference will be made to how to use the fuel cartridge for fuel cells as constructed above.
This fuel cartridge for fuel cells is intended to be carried about while being put in a bag, etc., and when fuel for a fuel cell is exhausted, the fuel cartridge is taken out of the bag so that the liquid fuel therein is filled into the fuel cell.
The entire outer periphery of the container 10 is covered with the cover 20 of high rigidity, so even if the container 10 is carried about while being received in a bag, etc., the container 10 is protected by the cover 20 and damage or the like of the container can be prevented.
In addition, since the valve mechanism portion 34 of the plug 30P is constantly in a closed state, even if the push-in cover member 22 is pushed, the valve 34a of the valve mechanism portion 34 will be only pressed against the valve seat 34b, and the valve mechanism portion 34 will be held in the closed state, so there will be no leakage of the liquid fuel.
The plug 30P is covered with the cap 60 during the time when the fuel cartridge is being carried about, but even if the cap 60 has temporarily come off, the flow passage of the projected connecting portion 31a of the plug 30P is thin or narrow, and hence there will be no fear that the valve stem 34f in the interior thereof might be pressed by mistake.
Moreover, since the slide cylindrical portion 22a of the push-in cover member 22 is made into inner fitting engagement, there is no protrusion formed on the outer surface of the push-in cover member, so the push-in cover member will be less prone to be caught even in a state where the container is received in the bag, and it is not easy to be disassembled or disconnected.

When the fuel cartridge is used, the cap 60 is removed, as shown in (C) Fig. 1, and the projected connecting portion 31a of the plug main body 31 is inserted into the inner periphery of the housing 141 of the socket 30S, as shown on an enlarged scale in (A) and (B) in Fig. 2. Then, the valve stem 132c on the socket 30S side comes into the passage 31b from the tip end of the projected connecting portion 71, and strikes against the valve stem 34f at the plug 30P side, whereby the valve 34a is pushed in against the spring force of the spring 34g to be moved away from the valve seat 34b, thus being placed into a valve opening state.
On the other hand, in the valve mechanism portion 130 on the socket 30S side, too, the valve 132 is pushed by the valve stem 132c against the spring force of the spring 133 to be moved away from the valve seat 131, whereby it is caused to open.

When the liquid fuel in the fuel cartridge is injected, the cover 20 is grasped by one hand of an operator, and the bottom cover portion 22b of the push-in cover member 22 is pushed in by the fingers of the operator. When the push-in cover member 22 is pushed in, the bellows portion 15 of the container 10 is contracted in a direction toward the central axis N, whereby the liquid fuel is injected. Since the amount of push-in is restricted at the time when the terminal end stopper 50 formed on the outer periphery of the slide cylindrical portion 22a of the push-in cover member 22 abuts against the open end 51 of the cover main body 21, a predetermined amount of the liquid fuel can be injected or supplied in an accurate manner.
In this example, the bellows portion 15 is formed in the small-diameter portion 11a of the body portion 11 which is covered with the push-in cover member 22, so the bellows portion 15 is directly compressed by means of the push-in cover member 22, and hence the bellows portion 15 can be extended and contracted in a stable manner.

Next, reference will be made to various modifications of this first embodiment.
In the following explanation of the modifications, only differences from the above-mentioned first embodiment will be mainly explained with the same components being identified by the same symbols while omitting an explanation thereof.
Fig. 3 shows a first modification.
This first modification has the bellows portion 15 of the container arranged at a position away from a part into which the slide cylindrical portion 22a of the push-in cover member 22 is fitted. That is, the bellows portion 15 is arranged not in the small-diameter portion 11a of the container body portion 11, but in the large-diameter portion 11b which is received in the cover main body 21.
Thus, if the bellows portion 15 is arranged at the position away from the slide cylindrical portion 22a, the part into which the slide cylindrical portion 22a is fitted does not deform even when the slide cylindrical portion 22a is stroked, so there is no need to provide a space for contraction of the bellows portion 15 in the outer periphery of the container 10, thereby making it possible to increase the volume efficiency of the container as much as possible.

(A) and (B) in Fig. 4 show a case of this first modification in which a stopper ring 80 is attached that acts as a stopper for limiting or restricting the sliding movement of the push-in cover member 22 when the fuel cartridge or container is disconnected with a fuel cell or unused. In the illustrated example, the stopper ring 80 is an elastically deformable member of a C-shaped cross section, and is fitted on an outer periphery of the slide cylindrical portion 22a which is exposed between the open end 51 of the extended cover main body 21 and the terminal end stopper 50 of the push-in cover member 22.
This stopper ring 80 is formed of a thin cylinder that is partially cut off, wherein when used, it is expanded and removed, and when unused, it is again attached or fitted onto the push-in cover member 22 so that the push-in cover member 22 can not be pushed in. A switch may be provided, as required, in order to facilitate the attachment and removal of the stopper ring.
By doing so, it is possible to prevent an increase in the internal pressure of the container 10 even if the push-in cover member 22 is pushed in by misoperation at the time of non use.

In (C) through (E) in Fig. 4, too, the sliding movement of the push-in cover member 22 is restricted or limited when disconnected with the fuel cell, i.e., when unused, but in this example, a stopper convex portion 81 is provided as a stopper. This stopper convex portion 81 is formed at a position at which it engages the open end 51 of the cover main body 21 in an extended state thereof, so that when the stopper convex portion 81 is engaged with the open end 51, the push-in cover member is prevented from being pushed in.
On the other hand, a slit 82 is formed on the cover main body 21 at a location in a circumferential direction thereof, and when used, the push-in cover member 22 is caused to rotate, so that the stopper convex portion 81 is matched to the position of the slit 82, thus permitting the push-in cover member to stroke or move.

Fig. 5 shows that in the first modification, the cap 61, which serves to cover the plug 30P at the time when the fuel cell cartridge is not in use, is caused to engage the push-in cover member 22, thereby constituting a presser portion that acts to push in the container 10.
That is, the construction is such that the cap 61 is engaged with the push-in cover member 22 so that the push-in cover member 22 is able to be pushed in through the cap 61.

In this example, the cover main body 21 has an end portion that is extended to a bottom portion side beyond the start end stopper 41 to form a cover extension portion 21e which serves to cover the push-in cover member 22. This cover extension portion 21e has an end thereof extending up to the position of the bottom cover portion 22b of the push-in cover member 22 in its extended state, so the structure is such that the push-in cover member 22 can not be pushed in easily.
The cap 61 is constructed to be provided with a cap main body 62 of a hat-shaped cross section that covers the connected protrusion portion 31 of the plug 30P, a threaded cylindrical portion 64 that is connected with an open end portion of the cap main body 62 through an annular connecting portion 63 and is threadedly engaged with the outer periphery of the holding cap 33 of the plug 30P, and an outer cylindrical portion 65 that extends from the annular connecting portion 63 in a direction opposite to the threaded cylindrical portion 64 so as to surround the cap main body 62.

The cap main body 62 is provided with a top plate portion 62a, and an inner cylindrical portion 62b that extends from a peripheral edge of the top plate portion 62a in a cylindrical fashion, wherein the inner cylindrical portion 62b has an end portion that abuts against an upper end of the holding cap 33 of the plug 30P.
The threaded cylindrical portion 64 takes a cylindrical shape, and is formed on its inner peripheral surface with a female thread that is adapted to engage a male thread formed on an outer periphery of the holding cap 33 of the plug 30P. In addition, the threaded cylindrical portion 64 is also formed on an inner periphery of its lower end with slight inwardly directed protrusions 64a.
The outer cylindrical portion 65 is a portion of a cylindrical shape that extends at a predetermined distance from the inner cylindrical portion 62b of the cap main body 62, and has an upper end extending up to a height equal to the top plate portion 62a, and is formed on its outer periphery with a plurality of stopper ribs 65a which together serve as a terminal end stopper for stroke restriction when they are placed into engagement with the push-in cover member 22 to act as a presser portion.

On the other hand, the bottom cover portion 22b of the push-in cover member 22 is formed with an annular convex portion 22c which is placed in engagement with an inner periphery of an open end of the threaded cylindrical portion 64 of the cap 61. The annular convex portion 22c is formed on its outer periphery with a slight outwardly directed protrusion 22d which is elastically engaged with the inwardly directed protrusions 64a which are formed on the inner periphery of the lower end of the threaded cylindrical portion 64 of the cap 61.
In use, the cap 61 is removed, and the open end portion of the threaded cylindrical portion 64 of the cap 33 is fitted over the outer periphery of the annular convex portion 22c which is protruded on the bottom cover portion 22b of the push-in cover member 22, so that the top plate portion 62a of the cap main body 62 is pressed as the presser portion.

Since the slide cylindrical portion 22a of the push-in cover member 22 is absorbed or sunk into the inner periphery of the cover main body 21 over the entire length thereof, no terminal end stopper is provided, and the push-in stroke is restricted or limited by the abutting engagement of the stopper ribs 65a arranged outside the cap 61 with one end of the cover extension portion 21e of the cover main body 21.
In the illustrated example, the cap 61 is caused to engage the push-in cover member 22, but the push-in cover member can be omitted, and the cap may be engaged with the bottom portion 12 of the container 10, so that the container 10 can be directly pushed in.

Fig. 6 shows a second modification.
This second modification is an example in which the push-in cover member 22 of the cover 20 is arranged at the port portion 14 side.
The cover main body 21 is constructed such that it has the body cover portion 21a which serves to cover the body portion 11 from the bottom portion 12 side of the container 10, and the push-in cover member 22 is constructed to have the slide cylindrical portion 22a which is slidably fitted into the body cover portion 21a of the cover main body 21 while covering the port portion 14 side of the container 10.
That is, the cover main body 21 is constructed such that it has the body cover portion 21a and the bottom cover portion 21f covering the bottom portion 12. In addition, the push-in cover member 22 is constructed such that it has the slide cylindrical portion 22a, a shoulder cover portion 22e which covers the shoulder portion 13, and a port cover portion 22f which protrudes from the shoulder cover portion 22e in a cylindrical fashion so as to cover the port portion 14.

The slide cylindrical portion 22a is of an inner fitting engagement structure in which it is fitted into the inner periphery of the body cover portion 21a of the cover main body 21, wherein the small-diameter portion 11a of the body portion 11 is located at the port portion 14 side, and the bellows portion 15 is formed in this small-diameter portion 11a.
In case where the push-in cover member 22 is arranged at the port portion 14 side, one can relatively push the push-in cover member 22 into the cover main body 21 by grasping the cover main body 21 with hand and pushing it toward the fuel cell, whereby the bellows portion 15 is caused to contract to inject a predetermined amount of liquid.

Fig. 7 shows a third modification. This third modification is an example in which the slide cylindrical portion 22a of the push-in cover member 22 has an outer fitting engagement construction in which it is fitted over an outer periphery of the body cover portion 21a of the cover main body 21.
In the case of the illustrated example, the push-in cover member 22 has a stepped construction in which an intermediate portion of the slide cylindrical portion 22a of the push-in cover member 22 is throttled or squeezed to form a stepped portion, and this stepped portion is arranged in axial opposition to the open end of the body cover portion 21a of the cover main body 21 thereby to provide the terminal end stopper 50.
By doing so, there is no need to provide a space in the inner periphery side of the body cover portion 21a of the cover main body 21 into which the slide cylindrical portion 22a is fitted, so the volume efficiency of this example can be improved more than that of the first embodiment. In the illustrated example, the outer diameter of the bellows portion 15 is set the same as the outer diameter of the body portion 11 of the container, but the bellows portion 15 may be smaller in diameter than the body portion 11. Even in the case of the bellows portion having a smaller diameter, the length of the small-diameter portion need only be equal to that of the bellows portion 15, so the volume efficiency can be improved more than that of the first embodiment.
In addition, in this third modification, the start end stoppers 41, 42, which are engageable with each other in the axial direction in the most extended position of the push-in cover member 22, are formed on the outer periphery of the body cover portion 21a and the inner periphery of the slide cylindrical portion 22a, respectively, so as to protrude therefrom. In the illustrated example, the start end stopper 41 at the body cover portion 21a side is formed at the outer periphery of the open end portion of the body cover portion 21a, and the start end stopper 42 at the slide cylindrical portion 22a side is formed on the inner periphery of the insertion direction tip end portion of the slide cylindrical portion 22a.

Fig. 8 shows a fourth modification.
This fourth modification is constructed such that in the third modification, the bellows portion 15 is arranged at a position away from a part into which the slide cylindrical portion 22a of the push-in cover member 22 is fitted, similar to the first modification.
Even when the slide cylindrical portion 22a is stroked or moved, those portions which are in fitting engagement with each other move while maintaining the same positional relation therebetween, and a space for the contraction of the bellows portion 15 need not be provided around the outer periphery of the container 10, as a result of which the volume efficiency can be made as much as possible.

Fig. 9 shows a fuel cartridge for fuel cells according to a second embodiment of the present invention.
This fuel cartridge 201 is provided with a flexible container 210 in which a liquid fuel is stored, and a cover 220 of high rigidity that covers an outer periphery of this container 210 thereby to protect the container 210, wherein a plug 230P, which acts as a connecting element adapted to be connected with a fuel cell for filling the fuel thereinto, is provided at a port portion 214 of the container 10 210.

In this second embodiment, the container 210 is constructed such that it takes a bottomed quadrangular (or rectangular) cylindrical shape that is flat in a front and rear direction and elongated in a longitudinal direction, and has a body portion 211 of a quadrangular or rectangular cylindrical shape, a bottom portion 212 at a lower end of the body portion 211, and a shoulder portion 213 at an upper end of the body portion 211, wherein the port portion 214 protrudes upwardly from the center of the shoulder portion 213.
The body portion 211 of the container 210 is provided with a bellows portion 215 that is an extendable and contractible portion capable of extending and contracting over the entire length thereof in a direction toward a central axis N. The bellows portion 215 may be provided in a part of the body portion 211 instead of over the entire length thereof, but with the provision of the bellows portion 215 over the entire length of the body portion 211, a stress acting on the body portion at the time of the contraction of the bellows portion can be distributed uniformly over the entire body portion.
The bellows portion 215 takes a shape having a plurality of large-diameter convex portions 216 and a plurality of small-diameter concave portions 217 repeated or arranged alternately in the direction of the central axis N, and in the illustrated example, the shape of each of the convex portions 216 is triangular. However, the shape of each convex portion of the bellows portion 215 is not limited to a triangular shape, and can take a variety of kinds of shapes capable of extending and contracting in the direction of the central axis, such as, for example, a trapezoidal shape, a continuous circular arc shape, etc.

The cover 20 is constructed to be provided, as a plurality of cover members, with a cover main body 221 that has a body cover portion 211a covering the body portion 211 from either one of a port portion 214 side of the container 210, and a push-in cover member 222 that has a slide cylindrical portion 222a which covers the bottom portion 212 of the container 210 and is slidably fitted into a body cover portion 221a of the cover main body 221.
In this second embodiment, unlike the first embodiment, when the liquid fuel is to be filled, the cover main body 221 is not grasped by a hand of an operator, but instead, the cover main body 221 has finger engagement portions 229, 229 formed to protrude to the left and right, respectively, so that the operator engages a forefinger and a middle finger thereof with these finger engagement portions 229, 229, respectively, and pushes in the push-in cover member 222 by a thumb, like an injection syringe.
The cover main body 221 takes a hollow hexahedral shape with its lower end opened, and is provided with the body cover portion 221a of a quadrangular (or rectangular) cylindrical shape, a shoulder cover portion 221b that covers the shoulder portion 213 of the container 210, and a port cover portion 211c that protrudes from this shoulder cover portion 221b in a cylindrical fashion to cover the port portion 214 of the container 210.
In addition, an interval between right and left side walls 228, 228 of the body cover portion 221a is larger than a right and left width of the body portion 211 of the container 210, and gaps are formed between the side walls 228, 228 and the right and left side surfaces of the container 210, respectively. The above-mentioned finger engagement portions 229, 229 are formed at lower end portions of outer side surfaces of the right and left side walls 228, 228, respectively.
The push-in cover member 222 has a hexahedral shape in which a lower end of the slide cylindrical portion 222a is closed by a bottom wall 222b and an upper end portion thereof is opened. A lower half portion of the container 210 is inserted into the slide cylindrical portion 222a, and the bottom portion 212 of the container 210 abuts against the bottom wall 222b.

Moreover, start end stoppers 241, 242, which are engageable with each other in the axial direction in the most extended position of the push-in cover member 222, are formed on the inner periphery of the body cover portion 221a and the outer periphery of the slide cylindrical portion 222a, respectively, so as to protrude therefrom. In the illustrated example, similar to the first embodiment, the start end stopper 241 at the body cover portion 221a side is formed at an inner periphery of an open end portion of the body cover portion 221a, and the start end stopper 242 at the slide cylindrical portion 222a side is formed on an outer periphery of an insertion direction tip end portion of the slide cylindrical portion 222a. In the free state, the bellows portion 215 is caused to extend, by an elastic restoring force thereof, up to a position in which the start end stoppers 241, 242 are placed into engagement with each other, and the bottom portion 212 of the container 210 is in abutment with the bottom wall 222b of the push-in cover member 222. These start end stoppers 241, 242 also function as a coming-off preventing mechanism for the push-in cover member 222, and these start end stoppers 241, 242 have engagement surfaces adapted to be engaged with each other at an angle of 90 degrees, and hence are not easily released or disengaged from each other. In addition, the tip end portions of the start end stoppers 241, 242 are formed into sloped or inclined surfaces, respectively, so that the insertion thereof at the time of assembly becomes easy.

On the other hand, the slide cylindrical portion 222a has a terminal end stopper 250 formed on the outer periphery thereof to protrude therefrom, the terminal end stopper 250 acting to limit or restrict to a predetermined amount an amount of push-in stroke of the push-in cover member 222, i.e., an amount of contraction of the bellows portion 215 of the container 210. This terminal end stopper 250 protrudes partially to an outer peripheral side from the slide cylindrical portion 222a so as to be arranged in opposition to the open end of the cover main portion 221 in an axial direction thereof, whereby it is placed into engagement with the open end of the cover main portion 221 thereby to limit or restrict the amount of push-in of the push-in cover member 222.
The construction of the plug 230P is the same as that of the plug 30P of the first embodiment, so an explanation thereof is omitted.

Now, reference will be made to how to use the fuel cartridge for fuel cells as constructed above.
At the time of squeezing, the push-in cover member 222 is pushed into the cover main body 221, as shown in (D) in Fig. 9. The body portion 211 of the container 210 is compressed between the bottom wall 222 of the push-in cover member 222 and the shoulder cover portion 221b of the cover main body 221, whereby the liquid fuel is injected. Since the amount of push-in is restricted at the time when the terminal end stopper 250 formed on the push-in cover member 22 abuts against the lower end of the cover main body 221, a predetermined amount of the liquid fuel can be injected in an accurate manner.
When pushing in the push-in cover member, one can easily push it in by supporting the cover main body 221 while engaging his or her fingers with the finger engagement portions 229, 229 protruded from the side walls 228, 228 of the cover main body 221.

Fig. 10 and Fig. 11 show a fuel cartridge for fuel cells according to a third embodiment of the present invention.
This fuel cartridge 301 for fuel cells is provided with a flexible container 310 in which a liquid fuel is stored, and a cover 320 of high rigidity that covers an outer periphery of this container 310 thereby to protect the container 310, wherein a plug 330P, which acts as a connecting element adapted to be connected with a fuel cell for filling the fuel thereinto, is provided at a port portion 314 of the container 310.
In this third embodiment, the body portion 311 of the container 310 is provided with a bellows portion 315 that is a portion capable of extending and contracting in a direction toward a central axis N, and the cover 320 is composed of a cover main body 321 and a push-in cover member 322, which serve as two cover members that are assembled with each other in the body portion 311 of the container 310 in a manner so as to be movable relative to each other in a direction of extension and contraction of the bellows portion 15.

The container 310 has a longitudinally elongated hollow structure that is flat in a front and rear direction, and is provided with the body portion 311, a bottom portion 312 at a lower end of the body portion 311, and a shoulder portion 313 at an upper end of the body portion 311, wherein an upwardly protruding port portion 314 is formed in the center of the shoulder portion 313.
The bellows portion 315 is formed to extend from one side surface 311a of the body portion 311 up to the vicinity of the central axis N. In the illustrated example, a plurality of longitudinal grooves 315a extending in the vertical direction are formed on a front surface 311b and a rear surface 311c of the body portion 311 at a predetermined pitch or interval in a direction perpendicular with respect to the central axis N. The longitudinal grooves 315a are deep near the side surface 311a, and shallower in a direction toward the central axis N.

The cover main body 321 of the cover 320 is a box body of a hollow hexahedral shape that is flat in a front and rear direction with its one side wall opened, and is provided with a body cover portion 321a of a quadrangular (or rectangular) cylindrical shape, a shoulder cover portion 321b that covers the shoulder portion of the container, a bottom cover portion 321c that covers the bottom portion of the container, and a port cover portion 321d that covers the port portion 314 of the container 310.
An opening portion 329 is formed in one side wall of the body cover portion 321a, and the push-in cover member 322 is fitted into this opening portion 329 so as to cover it.
The push-in cover member 322 is constructed such that it is mounted at its lower end on the body cover portion 321a in a manner as to be rotatable about a pivot portion 329a arranged at a lower edge of the opening portion 329 in the cover main body 321, wherein a free end of the push-in cover member 322 pushes the side surface 311a of the container 310 toward the center thereof.
Here, note that though not particularly illustrated, the push-in cover member 322 is provided, as necessary, with a coming-off preventing means for restricting the push-in cover member 322 from coming off outwardly from the opening portion 329.
The construction of the plug 330P is the same as that of the plug 30P of the first embodiment, so an explanation thereof is omitted.

Now, reference will be made to how to use the fuel cartridge for fuel cells as constructed above.
At the time of squeezing, the push-in cover member 322 is pushed into the cover main body 321, as shown in (A) and (B) in Fig. 11, whereby the side surfaces of the body portion 311 of the container 310 are compressed toward the center of the container thereby to inject the liquid fuel therein.
When the pushing operation is stopped, the push-in cover member 321 is automatically restored to an initial state under the action of an elastic restoring force of the bellows portion 315. In addition, since the container 310 is covered, around its entire circumference, with the push-in cover member 322 and the cover main body 321, it is possible to protect the container 310 in an appropriate manner. In the case of this third embodiment, unlike the first and second embodiments, it is constructed such that the container 310 is pushed in a direction perpendicular with respect to the central axis N thereof, so the liquid fuel can be injected only by grasping the cover.
The direction in which the bellows portion 315 extends and contracts is not limited to the direction perpendicular to the central axis N, but it may be inclined with respect to the direction perpendicular to the central axis N so as to match the direction of rotation of the push-in cover member 322, for example, as shown in (C) in Fig. 11. In short, it need only be constructed such that the bellows portion 315 can extend and contract in a direction crossing the central axis N.

Fig. 12 and Fig. 13 show a fuel cartridge for fuel cells according to a fourth embodiment of the present invention.
This fuel cartridge 400 for fuel cells is provided with a flexible container 410 in which a liquid fuel is stored, and a plug 430P which is arranged at a port portion 413 of the container 410, and which acts as a connecting element adapted to be connected with a fuel cell for filling the fuel thereinto, wherein no cover is provided for covering the container, unlike the above-mentioned respective embodiments.

The container 410 is of a bottomed cylindrical shape, and is constructed to be provided with a body portion 411 of a hollow cylindrical shape, a bottom portion 412 that closes a lower end of the body portion 411, a shoulder portion 413 that serves to squeeze or throttle an upper end of the body portion 411, and a port portion 414 of a cylindrical shape that protrudes upwardly from the shoulder portion 413. In this embodiment, a bellows portion 415, which is an extendable and contractible portion having elasticity, is arranged in a part of the body portion 411 near the bottom portion. The bellows portion 415 is of a construction that it can be pushed in from the bottom portion 412 toward the port portion 414 in a direction of a central axis N.
As the container 410, there is used a single-layer or multi-layer container which is composed of a single kind of, or a blend of a plurality of kinds of, polyester series resin(s). For example, a single-layer structure composed of PET, PEN or a blend of PET and PEN can be applied to the container.
A method of molding the container is due to a mono-axial or biaxial stretch blow molding.

On the plug 430P, there is provided a valve mechanism 34 which is held in a normally closed state in a free state thereof, and is opened when the plug is connected with a fuel cell 70. Unlike the first embodiment, a holding cap 33 for fixing the plug 430P with respect to the cover is unnecessary, so a plug main body 31 is only fixed to the port portion 414 of the container 410.
The construction and operation of the plug main body 31 and the valve mechanism portion 34 are fully similar to those of the first embodiment, the same components are identified by the same symbols while omitting an explanation thereof.
In use, as shown in (B) in Fig. 12 and in (A) and (B) in Fig. 13, the projected connecting portion 31a of the plug 30P is inserted into the socket 30S of the fuel cell, whereby the valve mechanism portion 34 of the plug 30P and the valve mechanism portion 140 of the socket 30S are caused to open. By pushing in the bottom portion 412 of the container 410, the bellows portion 415 is caused to contract, whereby the liquid fuel in the container 410 is injected into the fuel cell 70.

In the above-mentioned embodiments, reference has been made only to the construction of a container the entirety of which is covered with a cover, as shown in the first through third embodiments, or the construction of a container without a cover, as shown in the fourth embodiment, but in the case of covering a container with a cover, it is necessarily no need to cover the entire container with the cover, and it may be constructed such that a part of the container is covered with the cover.
In addition, although description has been given taking a bellows mechanism as an example for an extendable and contractible portion, there is no need to use such a bellows structure, but any construction capable of extending and contracting may be employed.

## Claims

1. A fuel cell cartridge for fuel cells which is provided with a container having a liquid fuel for a fuel cell received therein, and a connecting element that is arranged at a port portion of said container and is adapted to be connected with the fuel cell so as to fill the fuel thereinto, **characterized in that**
a portion capable of extension and contraction is formed in at least a part of said container, and
said connecting element is provided with a valve mechanism portion which is held in a normally closed state in a free state thereof, and is opened when said connecting element is connected with the fuel cell.

2. The fuel cartridge for fuel cells as set forth in claim 1, **characterized in that**
said container is a single-layer container composed of an olefin series resin or a multi-layer container composed of at least one layer of an olefin series resin.

3. The fuel cartridge for fuel cells as set forth in claim 1, **characterized in that**
said container is a single-layer container composed of a polyester series resin or a multi-layer container composed of at least one layer of a polyester series resin.

4. The fuel cartridge for fuel cells as set forth in claim 1, **characterized in that**
said container is a container of a multi-layer structure including at least one layer composed of an olefin series resin and at least one layer composed of a polyester series resin, with these layers being laminated with one another.

5. The fuel cartridge for fuel cells as set forth in any of claims 1 through 4, **characterized in that**
at least a part of an outer periphery of said container is covered with a cover that serves to protect said container.

6. The fuel cartridge for fuel cells as set forth in claim 5, **characterized in that**
said container takes a bottomed cylindrical shape, and has an extendable and contractible portion formed on a cylindrical body portion thereof; and
said cover is constructed to comprise, as a plurality of cover members, a cover main body that has a body cover portion to cover said body portion from either one of a port portion side and a bottom portion side of said container, and a push-in cover member that has a slide cylindrical portion to cover the other of the port portion side and the bottom portion side of said container and is fitted to said body cover portion of said cover main body for sliding movement with respect thereto.

7. The fuel cartridge for fuel cells as set forth in claim 6, **characterized in that**
a stroke limiting member for limiting an amount of push-in stroke of said push-in cover member when said push-in cover member is pushed in to contract said extendable and contractible portion is provided on at least one of said cover member and said push-in cover member.

8. The fuel cartridge for fuel cells as set forth in claim 7, **characterized in that**
a stroke limiting member is arranged at a start end or a terminal end of the push-in stroke of said push-in cover member, or at each of the start end and the terminal end thereof.

9. The fuel cartridge for fuel cells as set forth in any of claims 6 through 8, **characterized by** comprising:
a stopper that restricts the sliding movement of said push-in cover member when said connecting element is disconnected with said fuel cell.

10. The fuel cartridge for fuel cells as set forth in any of claims 6 through 9, **characterized in that**
said push-in cover member is constructed to cover a bottom portion of said container.

11. The fuel cartridge for fuel cells as set forth in any of claims 6 through 9, **characterized in that**
said push-in cover member is constructed to cover the port portion of said container.

12. The fuel cartridge for fuel cells as set forth in any of claims 6 through 11, **characterized in that**
the extendable and contractible portion of said container is formed in at least a part which is covered with said slide cylindrical portion of said push-in cover member.

13. The fuel cartridge for fuel cells as set forth in any of claims 6 through 11, **characterized in that**
the extendable and contractible portion of said container is formed at a location away from a part which is covered with the slide cylindrical portion of said push-in cover member.

14. The fuel cartridge for fuel cells as set forth in any one of claims 5 through 13, **characterized by** comprising:
a cap which covers said connecting element when said fuel cell cartridge is out of use, and which serves as a presser portion that is engaged with said container or said push-in cover member to push in said container when said fuel cell cartridge is in use.

15. The fuel cartridge for fuel cells as set forth in claim 5, **characterized in that**
an extendable and contractible portion is formed on the body portion of said container so as to extend and contract in a direction to cross a central axis thereof; and
said cover is composed of two cover members that are assembled with each other in the body portion of said container in a manner so as to be movable relative to each other in a direction in which the extendable and contractible portion extends and contracts.

16. The fuel cartridge for fuel cells as set forth in any one of claims 1 through 15, **characterized in that**
said extendable and contractible portion comprises a bellows mechanism.
